(19) **Europäisches Patentamt / European Patent Office / Office européen des brevets**

(11) **EP 2 721 713 B1**

(12) **FASCICULE DE BREVET EUROPEEN**

(45) Date de publication et mention
de la délivrance du brevet:
**10.08.2016 Bulletin 2016/32**

(21) Numéro de dépôt: **12738496.4**

(22) Date de dépôt: **15.06.2012**

(51) Int Cl.:
*B60L 1/02* (2006.01)       *B60L 1/04* (2006.01)
*H02J 7/04* (2006.01)       *H02J 7/14* (2006.01)
*B60L 11/18* (2006.01)       *H02J 7/00* (2006.01)

(86) Numéro de dépôt international:
**PCT/FR2012/051344**

(87) Numéro de publication internationale:
**WO 2012/172263 (20.12.2012 Gazette 2012/51)**

(54) **PROCEDE POUR ALIMENTER UN ACCESSOIRE ELECTRIQUE D'UN VEHICULE AUTOMOBILE COMPORTANT UNE BATTERIE ELECTRIQUE A LAQUELLE LEDIT ACCESSOIRE EST RACCORDE**

VERFAHREN ZUR ENERIGEVERSORGUNG EINES ELEKTRISCHEN ZUBEHÖRS EINES KRAFTFAHRZEUGES MIT EINER ELEKTRISCHEN BATTERIE, AN DIE DIESES ZUBEHÖR ANGESCHLOSSEN IST

METHOD FOR POWERING AN ELECTRICAL ACCESSORY OF A MOTOR VEHICLE COMPRISING AN ELECTRIC BATTERY TO WHICH SAID ACCESSORY IS CONNECTED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.06.2011   FR 1101851**
**16.06.2011   US 201161497644 P**

(43) Date de publication de la demande:
**23.04.2014   Bulletin 2014/17**

(73) Titulaire: **Renault S.A.S.**
**92100 Boulogne-Billancourt (FR)**

(72) Inventeurs:
• **OBERTI, Claire**
**F-75015 Paris (FR)**
• **BOIRON, Daniel**
**F-78960 Voisins-le-bretonneux (FR)**

(56) Documents cités:
**US-A1- 2008 218 129     US-A1- 2011 095 729**

EP 2 721 713 B1

Printed by Jouve, 75001 PARIS (FR)

**Description**

DOMAINE TECHNIQUE AUQUEL SE RAPPORTE L'INVENTION

La présente invention concerne un procédé pour alimenter un accessoire électrique d'un véhicule automobile comportant une batterie électrique à laquelle ledit accessoire est raccordé, ledit accessoire et ladite batterie étant également connectés électriquement à un générateur électrique externe.

Elle concerne également un véhicule comportant un accessoire dont l'alimentation est réalisée par un tel procédé.

ARRIERE-PLAN TECHNOLOGIQUE

Lors de sa charge, la batterie électrique de traction d'un véhicule automobile électrique ou hybride est connectée à un générateur électrique externe, par exemple à un réseau électrique standard du type « secteur ».

A la fin de la charge de cette batterie, le conducteur peut vouloir utiliser certains accessoires du véhicule consommant de l'énergie électrique, par exemple le chauffage, la climatisation ou un tuner radio.

Par ailleurs, un dispositif de refroidissement de la batterie peut également être activé après la charge de cette batterie afin d'optimiser les performances, le temps de charge et la durée de vie de la batterie en limitant l'échauffement de celle-ci.

Ces accessoires et ce dispositif de refroidissement sont classiquement alimentés uniquement par la batterie de traction du véhicule.

Ceci présente l'inconvénient de décharger partiellement la batterie fraichement rechargée, ce qui diminue l'autonomie du véhicule pour son utilisation suivante. On identifiera également les documents US 2008/218129 A1 du 11 septembre 2008 et US2011/095729 du 28 avril 2011 qui décrivent chacun des procédés pour alimenter entre-autre un accessoire électrique.

OBJET DE L'INVENTION

Afin de remédier à l'inconvénient précité de l'état de la technique, la présente invention propose un nouveau procédé pour l'alimentation des accessoires électriques du véhicule en fin de charge de la batterie, permettant de préserver l'autonomie de la batterie du véhicule.

L'invention est définie par les caratéristiques de la revendication indépendante. Les modes de réalisations préférés sont definis par les revendications dépendantes.

Plus particulièrement, on propose selon l'invention un procédé tel que décrit en introduction, selon lequel on réalise alternativement les étapes suivantes :

    a) on alimente ledit accessoire par la batterie du véhicule et
    b) on alimente ledit accessoire et ladite batterie par le générateur électrique externe.

Ainsi, on alimente alternativement l'accessoire par la batterie du véhicule (étape a)) et par le générateur externe (étape b)). Simultanément, la batterie est déchargée lors de l'étape a), et chargée lors de l'étape b).

Ces étapes peuvent être répétées autant de fois que nécessaire afin d'alimenter l'accessoire tout en rechargeant périodiquement la batterie.

Grâce à l'alternance de charge et décharge de la batterie, la diminution d'autonomie du véhicule au moment où le conducteur redémarre le véhicule est limitée.

D'autres caractéristiques non limitatives et avantageuses du procédé conforme à l'invention sont les suivantes :

- le procédé comporte les étapes suivantes :
- on détermine une valeur seuil inférieure d'une première caractéristique de charge de la batterie,
- on réalise l'étape a) lorsque ladite première caractéristique de charge est supérieure à ladite valeur seuil inférieure et
- on réalise l'étape b) lorsque la première caractéristique de charge de la batterie est inférieure à ladite valeur seuil inférieure ;
- on détermine une valeur initiale de ladite première caractéristique de charge, et ladite valeur seuil inférieure est déterminée en fonction de cette valeur initiale de ladite première caractéristique de charge.
- ladite valeur seuil inférieure est une valeur fixe prédéterminée. Cela permet de limiter les risques de sous tension de la batterie. La diminution de la charge de la batterie lors de l'étape a) est alors limitée car cette étape n'est mise en oeuvre que tant qu'une caractéristique de charge de la batterie, c'est-à-dire une caractéristique représentative de la charge de la batterie, reste supérieure à une valeur seuil inférieure.

Selon un mode de réalisation particulièrement avantageux de l'invention :

- le procédé comporte en outre les étapes suivantes :
- on détermine une valeur seuil supérieure d'au moins une deuxième caractéristique de charge de la batterie,
- on réalise l'étape b) tant que ladite deuxième caractéristique de charge de la batterie est inférieure à ladite valeur seuil supérieure ;
- lorsque ladite deuxième caractéristique de charge de la batterie devient supérieure à ladite valeur seuil supérieure, on réalise l'étape a) ;
- on détermine une valeur initiale de ladite deuxième caractéristique de charge, et ladite valeur seuil supérieure est déterminée en fonction de cette deuxième valeur initiale de ladite deuxième caractéristique de charge ;
- ladite valeur seuil supérieure est une valeur fixe prédéterminée.

Cela permet avantageusement de limiter les risques de surcharge ou de surtension de cette batterie lorsqu'elle est alimentée par le générateur externe en même temps que l'accessoire.

D'autres caractéristiques non limitatives et avantageuses du procédé conforme à l'invention sont les suivantes :

- on alterne la réalisation des étapes a) et b) en passant de l'étape a) à l'étape b) lorsque ladite première caractéristique de charge atteint ladite valeur seuil inférieure et en passant de l'étape b) à l'étape a) lorsque la deuxième caractéristique de charge atteint ladite valeur seuil supérieure ;
- lesdites première et deuxième caractéristiques de charge sont identiques ;
- lesdites première et deuxième caractéristiques de charge correspondent à l'état de charge de la batterie ;
- lesdites première et deuxième caractéristiques de charge correspondent à deux grandeurs physiques différentes ;
- ladite batterie du véhicule comportant une pluralité d'accumulateurs appelés cellules, ladite première caractéristique de charge correspond à la tension aux bornes de la cellule la moins chargée de la batterie et ladite deuxième caractéristique de charge correspond à la tension aux bornes de la cellule la plus chargée de la batterie ;
- la première étape mise en oeuvre est l'étape b) ;
- la première étape mise en oeuvre est l'étape a) ;
- un superviseur déterminant une consigne de courant d'entrée dans la batterie, cette consigne de courant est nulle lors de l'étape a) ;
- ladite consigne de courant est déterminée en fonction de la puissance électrique maximale pouvant être fournie par le chargeur et/ou en fonction de la puissance maximale pouvant être reçue par la batterie ;

L'invention concerne en outre un véhicule automobile comportant un accessoire électrique connecté à une batterie électrique dudit véhicule, dans lequel l'alimentation dudit accessoire est commandée par le procédé tel que décrit précédemment lorsque la batterie est chargée et connectée à un générateur externe.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 représente de manière schématique les éléments intervenants dans la mise en oeuvre du procédé selon l'invention et le flux d'énergie électrique (représenté par des flèches en traits pleins) alimentant les accessoires du véhicule lors de l'étape a) du procédé,
- la figure 2 représente de manière schématique les éléments de la figure 1 et le flux d'énergie électrique (représenté par des flèches en traits pleins) alimentant les accessoires du véhicule lors de l'étape b) du procédé,
- la figure 3 montre l'évolution de l'état de charge Pct_UserSoc de la batterie du véhicule lors de la mise en oeuvre successive des différentes étapes du procédé représentées aux figures 1 et 2,
- la figure 4 est une représentation schématique des fonctions de l'unité de commande électronique du véhicule programmée pour la mise en oeuvre du procédé selon l'invention,
- la figure 5 est une représentation schématique de l'évolution de l'état de charge de la batterie selon un premier mode de réalisation,
- la figure 6 est une représentation schématique de l'évolution de la tension aux bornes de la cellule de la batterie la plus chargée et aux bornes de la cellule de la batterie la moins chargée, selon un deuxième mode de réalisation,
- la figure 7 est une représentation schématique d'un mode de réalisation possible du superviseur 40 des figures 1 et 2.

Dispositif

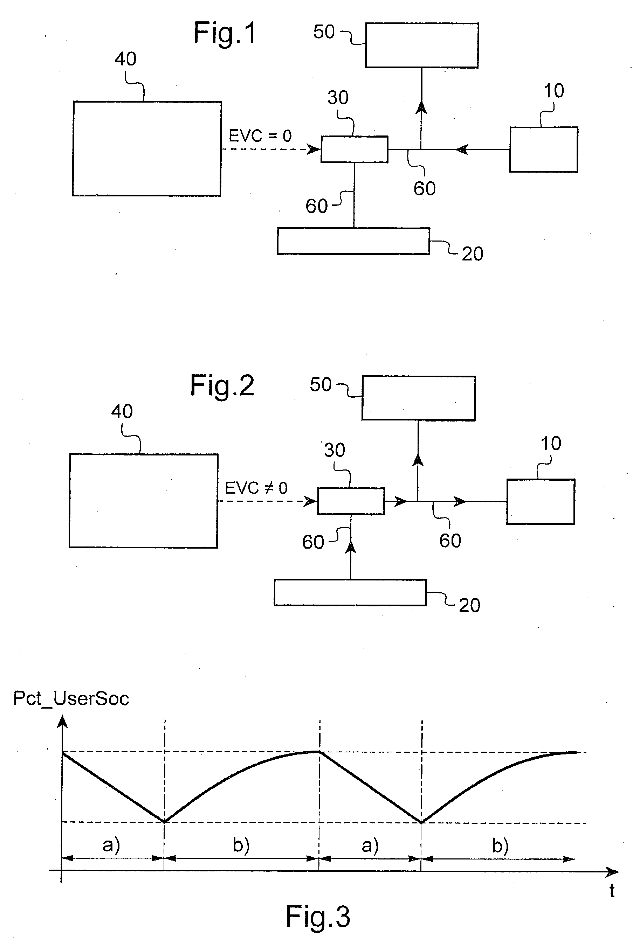

On a représenté sur les figures 1 et 2 les éléments d'un véhicule automobile (non représenté) intervenant dans la mise en oeuvre du procédé.

Ce véhicule automobile est un véhicule électrique ou hybride qui comporte une batterie 10 électrique de traction adaptée à fournir de l'énergie pour mettre en rotation les roues du véhicule.

La batterie 10 alimente à cet effet un moteur électrique d'entraînement du véhicule. Il peut s'agir notamment d'une batterie haute tension.

Cette batterie 10 est rechargeable et comporte une pluralité d'accumulateurs appelés couramment « cellules ».

Plusieurs éléments du véhicule interviennent dans la charge de la batterie et notamment : un chargeur 30 et un calculateur de supervision 40 de la charge appelé dans la suite « superviseur ». Ce chargeur 30 et ce superviseur 40 appartiennent à un circuit de charge 60 de la batterie 10.

Pour son chargement, la batterie 10 est connectée électriquement à un générateur 20 électrique distinct et indépendant de la batterie 10, par exemple au secteur. Ici, elle est reliée à ce générateur 20 par l'intermédiaire du chargeur 30. Ce générateur 20 est externe à la batterie 10 et généralement externe au véhicule. Il s'agit par exemple d'une prise électrique ou d'une borne de charge.

La batterie 10 et le chargeur 30 comprennent chacun un calculateur. Les calculateurs de la batterie 10, du chargeur 30 et du superviseur 40 sont adaptés à communiquer entre eux. Les informations reçues par le superviseur 40 lui permettent de déterminer une consigne de courant d'entrée de la batterie adaptée à la charge de celle-ci.

Cette consigne de courant est transmise par le superviseur 40 au chargeur 30 qui adapte en conséquence le courant venant du générateur 20 et envoyé vers la batterie 10.

Comme représenté sur les figures 1 et 2, un accessoire 50 est connecté électriquement la fois à la batterie 10 et au générateur électrique 20.

Ici, l'accessoire 50 est connecté au circuit de charge 60 entre la batterie 10 et le chargeur 30.

Il s'agit par exemple du chauffage ou de la climatisation de l'habitacle, d'un tuner radio, des phares du véhicule ou encore d'une source de lumière de l'habitacle.

Il peut s'agir également d'un dispositif de refroidissement de la batterie, qui limite l'augmentation de température de la batterie notamment pendant sa charge et juste après la charge. La charge de la batterie est ainsi réalisée dans des conditions optimales et la redescente en température de la batterie après la charge est accélérée, ce qui permet au conducteur de redémarrer le véhicule dans des conditions de fonctionnement optimales de la batterie 10. La durée de vie de la batterie et ses performances sont également améliorées.

Comme expliqué plus en détails ci-après, le superviseur 40 est de préférence programmé afin de prendre en compte l'activation de l'accessoire 50 du véhicule pendant la charge de la batterie 10 et, grâce au procédé selon l'invention, à la fin de la charge de la batterie 10. Cet accessoire consomme en effet une partie du courant envoyé par le chargeur 30 vers la batterie 10, ce qui risque de perturber la charge de la batterie. En outre, lorsque la charge de la batterie 10 est terminée, l'accessoire peut décharger cette batterie 10.

Pendant la charge de la batterie 10, le superviseur 40 assure que la charge de la batterie est réalisée de manière optimale, tout en permettant l'alimentation dudit accessoire 50 si nécessaire. Cet accessoire est alors alimenté par le générateur 20.

Comme expliqué plus en détails ci-après, grâce au procédé selon l'invention, le superviseur 40 assure à la fin de la charge de la batterie que l'accessoire 50 est alimenté en limitant la décharge de la batterie 10.

Le véhicule comporte en outre une unité de commande électronique (non représentée) qui est programmée pour mettre en oeuvre le procédé selon l'invention. Cette unité de commande électronique communique avec les calculateurs du superviseur 40, du chargeur 30 et de la batterie 10. Elle reçoit en outre les informations transmises par différents capteurs du véhicule en général et du moteur en particulier.

Procédé

L'invention concerne un procédé d'alimentation de l'accessoire du véhicule selon lequel l'unité de commande électronique commande en alternance la réalisation des étapes suivantes :

a) l'alimentation de l'accessoire 50 par la batterie 10 du véhicule et
b) l'alimentation de l'accessoire 50 et de la batterie 10 par le générateur 20 électrique externe connecté à ces deux éléments.

L'étape a) est représentée schématiquement sur la figure 1, tandis que l'étape b) est représentée sur la figure 2. Les flèches représentées sur ces deux figures indiquent le flux d'énergie circulant dans le circuit électrique décrit précédemment.

Ce procédé trouve une application particulièrement avantageuse pour l'alimentation de l'accessoire 50 après la charge complète de la batterie 10, alors que celle-ci est toujours connectée au générateur 20 par l'intermédiaire du chargeur 30.

En effet, dans cette situation, il est particulièrement désavantageux d'alimenter l'accessoire 50 uniquement par la batterie 10, car celle-ci se décharge et l'autonomie du véhicule pour le prochain démarrage diminue.

Il est en outre impossible d'alimenter l'accessoire uniquement par le générateur externe, car celui-ci étant toujours connecté à la batterie, du courant serait envoyé également à celle-ci et on risquerait de surcharger la batterie 10.

En réalisant alternativement les étapes a) et b), on alimente l'accessoire tout en limitant le déchargement de la batterie, puisque celle-ci est systématiquement rechargée lors de l'étape b). Il est en outre possible de limiter le risque de surcharge de la batterie.

Il est possible d'envisager de réaliser soit l'étape a), soit l'étape b) en premier.

Lorsque l'étape a) est réalisée en premier, la batterie 10 est d'abord déchargée, puis rechargée par le générateur 20 externe. A l'issue de ces deux étapes, la décharge de la batterie 10 est donc limitée, voire même nulle.

Le fait de réaliser l'étape b) en premier est avantageux car cela permet de compenser la perte de charge de la batterie 10 due au phénomène de relaxation de la batterie 10.

En effet, une fois que la batterie 10 est complètement chargée, l'état de charge de celle-ci décroit régulièrement dans le temps même lorsque celle-ci n'est pas utilisée pour alimenter le moteur électrique ou l'accessoire 50.

Cette diminution intrinsèque de la charge de la batterie 10 est appelée « relaxation » de la batterie 10.

Le fait de recharger d'abord la batterie 10 lorsque l'accessoire 50 est mis en marche permet de compenser la perte de charge due à la relaxation de la batterie 10 depuis la fin de la charge de la batterie 10.

En pratique, pendant l'étape a), le superviseur 40 est désactivé et transmet ici au chargeur 30 une consigne de courant entrant dans la batterie nulle. Ainsi, le générateur 20 ne fournit pas d'énergie, ni à la batterie 10, ni à l'accessoire 50 pendant cette étape, et l'accessoire 50 est alimenté par la batterie 10.

Pendant l'étape b), le superviseur 40 transmet au chargeur 30 une consigne de courant calculée selon toute manière connue de l'homme du métier. Cette consigne est donc de préférence identique à la consigne qui serait envoyée au chargeur 30 pendant la charge normale de la batterie 10.

Comme expliqué plus loin, cette consigne tient de préférence compte de la mise en marche de l'accessoire, comme si l'accessoire était mis en marche pendant la charge normale de la batterie.

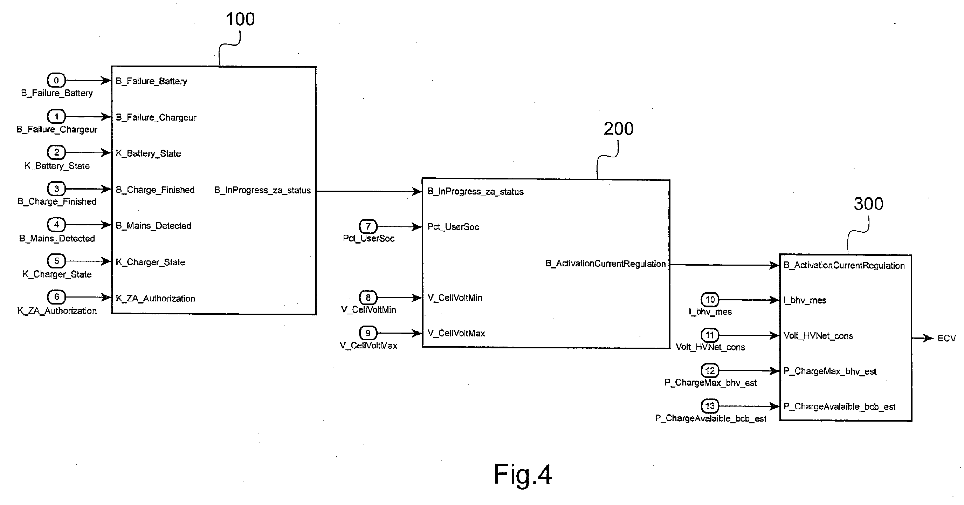

L'unité de commande électronique du véhicule est programmée pour mettre en oeuvre le procédé conforme à l'invention grâce à trois fonctions représentées par les blocs de la figure 4.

Une première fonction, appelée fonction d'initialisation et représentée par le bloc 100 sur la figure 4, détermine le moment où la mise en oeuvre du procédé doit commencer ou être interrompue.

Une deuxième fonction, appelée fonction d'activation et représentée par le bloc 200 sur la figure 4, commande la désactivation ou l'activation du superviseur 40, de manière à entraîner la transmission d'une consigne de courant nulle ou déterminée par le superviseur 40 au chargeur 30.

Une troisième fonction, appelée fonction de régulation et représentée par le bloc 300 sur la figure 4, est mise en oeuvre par le superviseur 40 et correspond à la détermination de la consigne de courant par celui-ci lorsqu'il est activé.

Le bloc 100 correspondant à la fonction d'initialisation émet à sa sortie un signal logique B_InProgress_za_status qui est par exemple égale à 1 si le procédé doit être mis en oeuvre et égale à zéro sinon.

Ce bloc 100 admet en entrée les signaux suivants transmis par le calculateur de la batterie 10 :

- un signal logique B_Failure_Batterie indiquant si un défaut de fonctionnement de la batterie a été détecté par le calculateur de celle-ci,
- un signal K_Battery_State indiquant le mode de fonctionnement de la batterie, c'est-à-dire si celle-ci se trouve en mode de chargement ou non,
- un signal logique B_Charge_Finished indiquant si la charge de la batterie est finie.

Il admet en entrée les signaux suivants transmis par le calculateur du chargeur 30 :

- un signal logique B_Failure_Chargeur indiquant si un défaut de fonctionnement du chargeur 30 a été détecté par le calculateur de celui-ci,
- un signal K_Chargeur_State indiquant le mode de fonctionnement du chargeur, c'est-à-dire si celui-ci se trouve en mode de chargement ou non,
- un signal logique B_Mains_Detected indiquant si le chargeur 30 est connecté électriquement au générateur externe 20 ou non.

Enfin, le bloc 100 reçoit un signal K_ZA_Authorization lui indiquant si l'accessoire 50 est mis en marche et doit être alimenté. Ce signal est par exemple généré par l'unité de commande électronique du véhicule elle-même.

En pratique, le signal de sortie du bloc 100 est égal à 1 et indique que le procédé doit commencer ou continuer à être mis en oeuvre si les conditions suivantes sont remplies simultanément :

- les signaux K_Battery_State et K_Chargeur_State indiquent que la batterie 10 et le chargeur 30 sont tous les deux en mode de chargement, et
- le signal B_Charge_Finished indique que la charge de la batterie est finie, et
- le signal B_Mains_Detected indique que le chargeur 30 est connecté électriquement au générateur externe 20, et
- le signal K_ZA_Authorization indique que l'accessoire 50 est mis en marche et doit être alimenté électriquement.

Le signal de sortie du bloc 100 est égale à zéro et indique que le procédé n'est pas mis en oeuvre ou que sa mise en oeuvre est interrompue si :

- le signal logique B_Failure_Batterie indique qu'un défaut de fonctionnement de la batterie 10 a été détecté, ou
- un signal logique B_Failure_Chargeur indique qu'un défaut de fonctionnement du chargeur 30 a été détecté, ou
- l'un au moins des signaux K_Battery_State et K_Chargeur_State indique que la batterie 10 ou le chargeur 30 n'est pas en mode de chargement, ou
- le signal B_Charge_Finished indique que la charge de la batterie n'est pas finie, ou
- le signal B_Mains_Detected indique que le chargeur 30 n'est pas connecté électriquement au générateur externe 20, ou
- le signal K_ZA_Authorization indique que l'accessoire n'est pas activé et ne doit pas être alimenté électriquement.

Le signal de sortie B_InProgress_za_status du bloc 100 est transmis au bloc 200 de la figure 4.

Si le signal de sortie B_InProgress_za_status du bloc 100 indique que le procédé ne doit pas être mis en oeuvre, le bloc 200 émet un signal de sortie B_ActivationCurrentRegulation égal à zéro indiquant que la consigne de courant en entrée de la batterie est nulle.

Si le signal de sortie B_InProgress_za_status du bloc 100 indique que le procédé doit être mis en oeuvre, le bloc 200 élabore un signal de sortie B_ActivationCurrentRegulation indiquant laquelle des étapes a) et b) du procédé doit être mise en oeuvre.

En pratique, le signal de sortie B_ActivationCurrentRegulation du bloc 200 est transmis au superviseur 40.

L'élaboration du signal de sortie B_ActivationCurrentRegulation du bloc 200 est décrite plus en détail ci-après.

Dans le cas où l'étape a) est mise en oeuvre, le signal B_ActivationCurrentRegulation désactive le superviseur 40, auquel cas une consigne nulle est transmise au chargeur.

Dans le cas où l'étape b) est mise en oeuvre, le signal B_ActivationCurrentRegulation active le superviseur 40 et indique que celui-ci doit calculer et transmettre une consigne de courant au chargeur.

De préférence, le bloc 200 est programmé de telle sorte que l'alternance entre l'étape a) et l'étape b) du procédé soit déterminée en fonction d'au moins une caractéristique représentative de la charge de la batterie, de manière à ce que la batterie ne se décharge pas au-delà d'un certain seuil. La perte d'autonomie du véhicule correspondante est ainsi limitée.

Plus précisément, le procédé selon l'invention comporte alors les étapes suivantes, qui sont ici réalisée dans le bloc 200 :

- l'unité de commande électronique détermine une valeur seuil inférieure d'une première caractéristique de charge de la batterie 10,
- l'unité de commande électronique réalise l'étape a) tant que ladite première caractéristique de charge reste supérieure à ladite valeur seuil inférieure et
- l'unité de commande électronique réalise l'étape b) lorsque la première caractéristique de charge de la batterie 10 est inférieure à ladite valeur seuil inférieure.

De préférence, l'unité de commande électronique réalise l'étape a) tant que ladite première caractéristique de charge reste strictement supérieure à ladite valeur seuil inférieure et l'unité de commande électronique réalise l'étape b) lorsque la première caractéristique de charge de la batterie 10 est inférieure ou égale à ladite valeur seuil inférieure.

Ladite valeur seuil inférieure est de préférence déterminée en fonction d'une valeur initiale de ladite première caractéristique de charge, déterminée au moment où le signal de sortie du bloc 100 indique pour la première fois que le procédé doit être mis en oeuvre.

En variante, ladite valeur seuil inférieure est une valeur fixe prédéterminée.

En outre, l'unité de commande électronique peut être programmée pour réaliser les étapes suivantes :

- déterminer une valeur seuil supérieure d'au moins une deuxième caractéristique de charge de la batterie 10,

- réaliser l'étape b) tant que ladite deuxième caractéristique de charge de la batterie 10 est inférieure à ladite valeur seuil supérieure.

De préférence, l'unité de commande électronique est programmée pour réaliser l'étape b) tant que ladite deuxième caractéristique de charge de la batterie 10 est strictement inférieure à ladite valeur seuil supérieure.

Ainsi, on limite la valeur maximale que pourra atteindre la deuxième caractéristique de charge de la batterie 10 de manière à éviter une surcharge ou une surtension de cette batterie 10.

Ensuite, lorsque ladite deuxième caractéristique de charge de la batterie devient supérieure à ladite valeur seuil supérieure, l'unité de commande électronique réalise l'étape a).

De préférence, l'unité de commande électronique réalise l'étape a) lorsque ladite deuxième caractéristique de charge de la batterie devient supérieure ou égale à ladite valeur seuil supérieure.

Ladite valeur seuil supérieure est par exemple déterminée en fonction d'une deuxième valeur initiale de ladite deuxième caractéristique de charge déterminée au moment où le signal de sortie du bloc 100 indique pour la première fois que le procédé doit être mis en oeuvre.

En variante, ladite valeur seuil inférieure est une valeur fixe prédéterminée.

L'unité de commande électronique commande de préférence en alternance la réalisation des étapes a) et b), en passant de l'étape a) à l'étape b) lorsque ladite première caractéristique de charge atteint la valeur seuil inférieure, et en passant de l'étape b) à l'étape a) lorsque la deuxième caractéristique de charge atteint la valeur seuil supérieure, aussi longtemps que le signal de sortie du bloc 100 indique que l'on doit mettre en oeuvre le procédé.

On répète alors des cycles de charge (étape b)) et décharge (étape a)) de la batterie, au cours desquels l'état de charge Pct_User_Soc de la batterie 10 augmente et diminue, comme représenté sur la figure 3.

En pratique, plusieurs manières de réaliser la fonction d'activation du bloc 200 sont possibles.

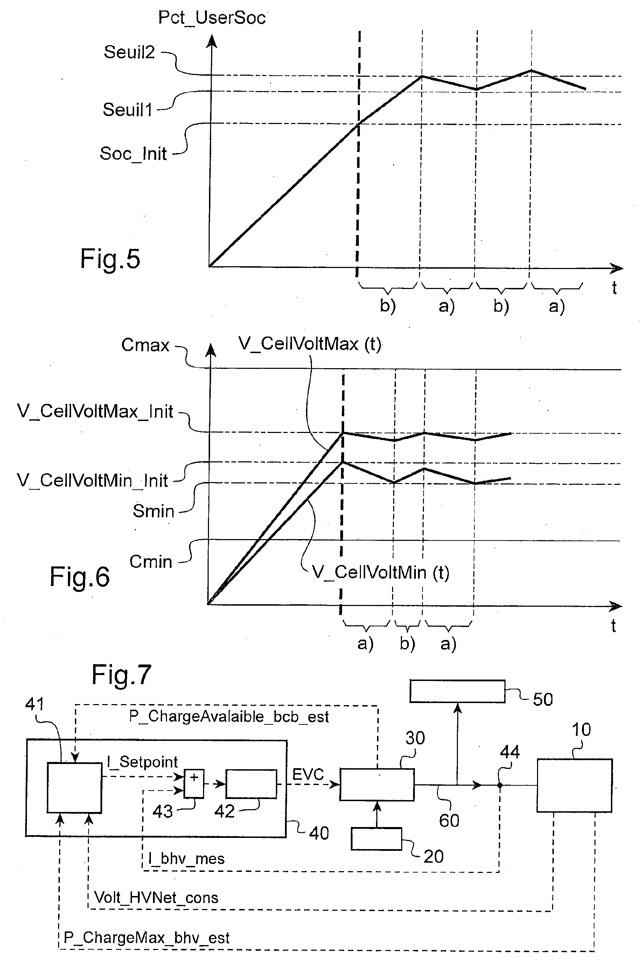

Selon un premier mode de réalisation représenté sur la figure 5, lesdites première et deuxième caractéristiques de charge sont identiques et correspondent à l'état de charge Pct_User_Soc de la batterie 10.

L'état de charge Pct_User_Soc de la batterie 10 est exprimé de manière classique en pourcentage de l'état de charge maximal possible de la batterie. Un état de charge maximal est donc égal à 100%, tandis qu'un état de charge minimal est égale à 0%.

L'état de charge Pct_User_Soc de la batterie est estimé par le calculateur de la batterie 10.

Une valeur initiale SOC_init de l'état de charge Pct_User_Soc de la batterie 10 est mise en mémoire dans l'unité de commande électronique du véhicule au moment où le procédé commence à être mis en oeuvre.

L'unité de commande électronique a en outre en mémoire les paramètres suivants :

- une valeur maximale Lmax de l'état de charge Pct_User_Soc atteignable dans le cas d'un procédé mis en oeuvre dès la fin de la charge de la batterie, et
- une valeur minimale Lmin de l'état de charge Pct_User_Soc autorisée lors de la mise en oeuvre du procédé dès la fin d'une charge de la batterie.

Ladite valeur maximale Lmax de l'état de charge correspond par exemple à la valeur théorique de 100% qui est le maximum de charge possible de la batterie.

Ladite valeur minimale Lmin de l'état de charge est une valeur déterminée par des essais ou des calibrations permettant de limiter la perte d'autonomie du véhicule. Cette valeur minimale est par exemple supérieure à 99%, de manière à correspondre à une perte d'autonomie inférieure à 1,5 kilomètres. Elle est par exemple égale à 99,7%.

L'unité de commande électronique a également en mémoire les paramètres suivants :

- une constante Delta1 déterminée lors d'une étape de calibration et prenant en compte le phénomène de relaxation de la batterie,
- une constante Delta2 déterminée par calibration et correspondant à la perte maximale de charge autorisée de la batterie lors de la mise en oeuvre du procédé selon l'invention.

A partir de ces paramètres mémorisés et de la valeur initiale estimée de l'état de charge SOC_Init, l'unité de commande électronique est programmée pour déterminer la valeur seuil inférieure Seuil1 et la valeur seuil supérieure Seuil2 de l'état de charge Pct_User_Soc de la batterie selon les formules suivantes :

$$Seuil1 = Min(SOC\_Init + Delta1 - Delta2, Lmin)$$

$$Seuil2 = Min(SOC\_Init + Delta1, Lmax)$$

où Min représente la fonction minimum.

L'unité de commande électronique compare ensuite à chaque instant t une valeur déterminée à cet instant de l'état de charge Pct_User_Soc(t) de la batterie et ces deux seuils.

Si la valeur initiale SOC_Init de l'état de charge Pct_User_Soc est supérieure à la valeur seuil supérieure Seuil2, le signal de sortie B_Activation CurrentRegulation du bloc 200 indique que le superviseur 40 est désactivé et que la consigne de courant est égale à zéro. Ainsi c'est l'étape a) qui est mis en oeuvre en premier.

Si la valeur initiale SOC_Init de l'état de charge Pct_User_Soc est inférieure à la valeur seuil inférieure Seuil1, le signal de sortie B_Activation CurrentRegulation du bloc 200 indique que le superviseur 40 est activé et une consigne de courant non nulle est transmise au chargeur. Dans ce cas la consigne de courant est élaborée par le bloc 300. C'est alors l'étape b) qui est mise en oeuvre en premier.

Si la valeur initiale SOC_Init de l'état de charge Pct_User_Soc est inférieure à la valeur seuil supérieure Seuil2 et supérieure à la valeur seuil inférieure Seuil1, l'unité de commande électronique peut avantageusement être programmée pour réaliser l'étape a) ou l'étape b) en premier.

De préférence, l'unité de commande électronique est programmée pour réaliser l'étape b) en premier.

En commençant par une étape de charge de la batterie, la perte de charge de la batterie liée au phénomène de relaxation décrit précédemment est compensée. L'état de charge de la batterie à l'issue de la mise en oeuvre du procédé est alors optimisé.

Ensuite, lorsque la valeur de l'état de charge à l'instant t Pct_User_Soc(t) devient supérieure ou égale à la valeur seuil supérieure Seuil2, le signal de sortie B_Activation CurrentRegulation du bloc 200 indique que le superviseur 40 est désactivé et que la consigne de courant est égale à zéro de manière à passer à la réalisation d'une étape a). Ainsi la surcharge de la batterie est évitée.

Ensuite, lorsque la valeur de l'état de charge à l'instant t Pct_User_Soc(t) devient inférieure ou égale à la valeur seuil inférieure Seuil1, le signal de sortie B_Activation CurrentRegulation du bloc 200 indique que le superviseur 40 est activé et une étape b) est de nouveau réalisée.

Les étapes a) et b) sont ainsi alternées et la valeur de l'état de charge de la batterie reste comprise entre les valeurs seuil minimum Seuil 1 et maximum Seuil2.

Selon un deuxième mode de réalisation de l'invention, représenté sur la figure 6, lesdites première et deuxième caractéristiques de charge correspondent à deux grandeurs physiques différentes.

Par exemple, ladite première caractéristique de charge correspond à la tension V_CellVoltMin aux bornes de la cellule la moins chargée de la batterie et ladite deuxième caractéristique de charge correspond à la tension V_CellVoltMax aux bornes de la cellule la plus chargée de la batterie.

Ces tensions sont des caractéristiques représentatives de la charge de la batterie car elles varient de la même manière que l'état de charge de la batterie.

Une valeur initiale V_CellVoltMin_Init, V_CellVoltMax_Init de chacune des tensions V_CellVoltMin aux bornes de la cellule la moins chargée de la batterie et V_CellVoltMax aux bornes de la cellule la plus chargée de la batterie est mise en mémoire dans l'unité de commande électronique du véhicule au moment où le procédé commence à être mis en oeuvre.

Ces tensions sont ici de préférence mesurées.

La tension V_CellVoltMin aux bornes de la cellule la moins chargée de la batterie à l'instant t est la tension aux bornes de la cellule la moins chargée à cet instant, quelle que soit cette cellule. De même, la tension V_CellVoltMax aux bornes de la cellule la plus chargée de la batterie est la tension aux bornes de la cellule la plus chargée à l'instant t, quelle que soit cette cellule.

L'unité de commande électronique a en outre en mémoire les paramètres suivants :

- une valeur maximale Cmax de la tension d'une cellule quelconque de la batterie, au-delà de laquelle il existe un risque de surtension de la cellule,
- une valeur minimale Cmin de la tension d'une cellule quelconque de la batterie, au-dessous de laquelle il existe un risque de sous-tension de la cellule.

Ces valeurs minimales et maximales sont déterminées par calibration.

L'unité de commande électronique a également en mémoire une constante Delta3 déterminée par calibration et correspondant à la perte maximale de charge de la batterie autorisée lors de la mis en oeuvre du procédé selon l'invention.

A partir de ces paramètres mémorisés et des valeurs initiales mesurées des tensions aux bornes de la cellule la plus et la moins chargée V_CellVoltMin_Init, V_CellVoltMax_Init, l'unité de commande électronique est programmée pour déterminer la valeur seuil inférieure Smin de la tension aux bornes de la cellule la moins chargée de la batterie et la valeur seuil supérieure Smax de la tension aux bornes de la cellule la plus chargée de la batterie selon les formules suivantes :

$$Smin = Max(Cmin, V\_CellVoltMin\_Init - Delta3)$$

Smax = Min(Cmax, V_CellVoltMax_Init), où Max représente la fonction maximum et Min la fonction minimum.
Cmin et Cmax sont des seuils sécuritaires qui ne sont pas atteints en fonctionnement nominal. On a donc plus simplement en fonctionnement nominal :

$$Smin = V\_CellVoltMin\_Init - Delta3$$

$$Smax = V\_CellVoltMax\_Init.$$

Sur la figure 6, on a représenté un exemple dans lequel la tension V_CellVoltMin_Init de la cellule la moins chargée au déclenchement du procédé est supérieure à la valeur minimale Cmin, donc Smin = V_CellVoltMin_Init - Delta3.
Dans cet exemple, la tension V_CellVoltMax_Init de la cellule la plus chargée au déclenchement du procédé est inférieure à la valeur maximale Cmax, donc Smax = V_CellVoltMax_Init.
L'unité de commande électronique compare ensuite à chaque instant t :

- une valeur V-CellVoltMax(t) déterminée à cet instant t de la tension aux bornes de la cellule la plus chargée à la valeur seuil supérieure Smax de la tension aux bornes de la cellule la plus chargée et
- une valeur V_CellVoltMin(t) déterminée à cet instant t de la tension aux bornes de la cellule la moins chargée de la batterie à la valeur seuil inférieure Smin de la tension aux bornes de la cellule la moins chargée.

Si la valeur V_CellVoltMax(t) déterminée à cet instant t de la tension aux bornes de la cellule la plus chargée est supérieure ou égale à la valeur seuil supérieure Smax, le signal de sortie B_ActivationCurrentRegulation du bloc 200 indique que le superviseur 40 est désactivé et que la consigne de courant est égale à zéro. Ainsi la surtension de la batterie est évitée et l'accessoire est alimenté par la batterie 10, ce qui correspond à la réalisation de l'étape a).
Comme au déclenchement du procédé la tension V_CellVoltMax est ici égale à Smax, c'est l'étape a) qui est réalisée en premier dans ce deuxième mode de réalisation (voir figure 6).
Pendant l'étape a) de décharge de la batterie, la tension aux bornes des cellules diminue.
Ensuite, lorsque la valeur de la tension V_CellVoltMin(t) aux bornes de la cellule la moins chargée à l'instant t devient inférieure ou égale à la valeur seuil inférieure Smin, le signal de sortie B_ActivationCurrentRegulation du bloc 200 indique que le superviseur 40 est activé et une consigne de courant non nulle est transmise au chargeur pour réaliser l'étape b).
En variante, on peut en outre ajouter une condition temporelle pour le passage de l'étape a) à l'étape b) : il s'agit d'imposer une durée minimale de réalisation de l'étape a) de décharge avant de passer à l'étape b). Cela permet d'éviter des oscillations entre l'étape a) et l'étape b) notamment lors de forts appels de courant occasionnant une chute brutale de la tension aux bornes des cellules de la batterie, comme cela est par exemple de cas à froid lors de l'allumage du dispositif de chauffage de l'habitacle.
Le passage de l'étape a) à l'étape b) ne s'effectue néanmoins que si la condition énoncée précédemment est remplie, à savoir si ladite première caractéristique de charge a atteint la valeur seuil inférieure.
Comme représenté sur la figure 6, lors de cette étape b), la tension aux bornes des cellules de la batterie augmente.
Lorsque la valeur de la tension V_CellVoltMax(t) aux bornes de la cellule la plus chargée à l'instant t devient supérieure ou égale à la valeur seuil supérieure Smax, le signal de sortie B_ActivationCurrentRegulation du bloc 200 indique que le superviseur 40 est désactivé et une consigne de courant nulle est transmise au chargeur pour réaliser à nouveau l'étape a).
Les deux étapes sont ainsi alternées et les surtensions et sous-tensions de la batterie sont évitées, tout en assurant que la charge de la batterie ne diminue pas en dessous d'une valeur correspondant à la charge de la batterie lorsque la tension de la cellule la moins chargée est égale à la valeur seuil inférieure Smin.
En variante, on peut prévoir dans ce mode de réalisation que l'unité de commande électronique ait également en mémoire une constante Delta4 déterminée par calibration et permettant de compenser le phénomène de relaxation de la batterie.

Dans ce cas, la valeur seuil supérieure Smax de la tension aux bornes de la cellule la plus chargée de la batterie est calculée selon la formule suivante :

$$Smax = Min\ (Cmax,\ V\_CellVoltMax\_Init + Delta4),$$

Cela donne, en fonctionnement nominal :

$$Smax = V\_CellVoltMax\_Init + Delta4.$$

En outre, l'unité centrale de commande est alors programmée pour réaliser en premier une étape b). Cette variante constitue le mode de réalisation préféré de l'invention.

Par la suite, l'alternance des étapes a) et b) se déroule de la même manière que décrit précédemment.

Ce deuxième mode de réalisation présente l'avantage de reposer sur les valeurs des tensions des cellules qui sont mesurées et non estimées comme l'état de charge de la batterie. Dans ces conditions, le procédé est mis en oeuvre de manière plus précise.

Quel que soit le mode de réalisation, on peut envisager en variante que les valeurs seuil supérieures et inférieures soit des valeurs prédéterminées lors d'essais de calibration.

Comme expliqué précédemment, lorsque le signal de sortie B_ActivationCurrentRegulation du bloc 200 est égal à zéro, le superviseur 40 est désactivé et une consigne de courant égale à zéro est transmise au chargeur 30.

En conséquence, le chargeur 30 ne fait passer aucun courant électrique du générateur externe 20 vers la batterie 10. La batterie 10 alimente donc seule l'accessoire 50.

Lorsque le signal de sortie B_ActivationCurrent Régulation du bloc 200 est égal à 1, le superviseur 40 est activé et calcule la consigne de courant transmise au chargeur 30, réalisant ainsi la fonction de régulation représentée au bloc 300. Cette consigne est notée ECV sur les figures 1, 2 et 4.

Cette consigne peut être calculée par tout mode de calcul connu de l'homme du métier.

En particulier, la consigne de courant peut être calculée par le superviseur 40 programmé pour prendre en compte le fait que l'accessoire reçoit une partie du courant destiné à la batterie 10. Le fonctionnement de ce superviseur 40 est représenté sur la figure 7.

Plus précisément, comme représenté sur la figure 7, le superviseur 40 reçoit des signaux provenant des calculateurs du chargeur 30 et de la batterie 10.

Il reçoit notamment de la batterie 10 :

- un signal Volt_HVNet_cons indiquant la tension du réseau haute tension dans le véhicule, et - un signal P_ChargeMax_bhv_est indiquant la puissance de charge maximum que peut recevoir la batterie en kiloWatts.

Le signal P_ChargeMax_bhv_est est également estimé par le calculateur de la batterie.

Le signal Volt_HVNet_cons est par exemple déterminé par une triangulation de trois mesures de tension faites par les calculateurs de la batterie, du chargeur et du moteur électrique.

Le superviseur 40 reçoit du chargeur 30 un signal P_ChargeAvailable_bcb_est estimé par le calculateur du chargeur indiquant la puissance de charge maximum que peut fournir le chargeur en kiloWatts.

Afin d'ajuster la consigne de courant de charge de la batterie lorsque l'accessoire 50 est mis en marche, le superviseur 40 comprend ici un générateur de consigne de courant 41, un régulateur 42 et un bloc de soustraction de signal 43. Le régulateur est de préférence du type proportionnel-intégral.

Le superviseur 40 réalise alors une régulation en boucle fermée de l'intensité du courant entrant dans la batterie.

La consigne de courant ECV générée par le superviseur 40 dépend de préférence de la puissance électrique maximale pouvant être fournie par le chargeur et/ou de la puissance électrique maximale pouvant être reçue par la batterie.

Plus précisément, le générateur de consigne 41 reçoit les signaux Volt_HVNet_cons, P_ChargeMax_bhv_est et P_ChargeAvaitabte_bcb_est et élabore une consigne intermédiaire I_Setpoint de courant.

Cette consigne intermédiaire I_Setpoint est par exemple calculée selon la formule :

$$1\text{-Setpoint} =$$

Min(P_ChargeAvaitabte_bcb_est,P_ChargeMax_bhv_est)/Volt_HVNet_cons.

La consigne intermédiaire I_Setpoint déterminée par le générateur de consigne 41 est comparée à l'intensité réelle I_bhv_mes du courant entrant dans la batterie par le soustracteur 43.

Ce soustracteur 43 reçoit en entrée cette consigne intermédiaire I_Setpoint et une valeur de l'intensité du courant en entrée de la batterie I_bhv_mes mesurée par un capteur de courant 44 disposé en entrée de la batterie, entre l'endroit où l'accessoire est connecté au circuit électrique et l'entrée de la batterie.

Le signal de sortie du soustracteur 43 correspond alors à l'écart Ec entre la consigne intermédiaire I_Setpoint et la valeur réelle de l'intensité du courant I_bhv_mes, soit Ec = I_Setpoint - I_bhv_mes.

Lorsque l'accessoire 50 est mis en marche, une partie du courant destiné à la batterie 10 est utilisé par l'accessoire 50. Le courant mesuré I_bhv_mes en entrée de la batterie 10 diminue.

La consigne de courant ECV calculée par le régulateur 41 est alors corrigée pour tenir compte de l'écart Ec entre la consigne intermédiaire I_Setpoint et le courant mesuré I_bhv_mes, afin de compenser l'effet de la mise sous tension de l'accessoire 50 sur le courant de charge de la batterie 10. La consigne de courant entrant dans la batterie dépend alors également de l'écart Ec entre la consigne intermédiaire I_Setpoint et le courant mesuré I_bhv_mes.

Ainsi l'accessoire 50 est alimenté, et la batterie 10 est chargée de manière optimale.

Le régulateur 42 utilisé est par exemple un correcteur de type proportionnel-intégral, dont les paramètres sont un facteur de gain proportionnel et un facteur de gain intégral. Un tel correcteur inclus avantageusement un dispositif anti Wind-Up, c'est-à-dire un dispositif anti-saturation qui permet de prendre en compte les saturations dans la génération de la consigne ECV.

Les facteurs de gain proportionnel et intégral sont déterminés par calibration à partir de la fonction de transfert du chargeur 30 en boucle ouverte.

Par exemple, le gain proportionnel est déterminé comme le gain maximal assurant une marge de phase de 45° sur le diagramme de Bode de ladite fonction de transfert.

Le gain intégral est déterminé par exemple en imposant que la fréquence de l'action intégrale soit une fréquence égale à une décade en dessous de la fréquence où la phase vaut 135° en boucle ouverte. On pourrait dans un mode dégradé envisager que l'alternance entre les deux étapes a) et b) soit prédéterminée, par exemple en définissant des durées fixes de mise en oeuvre de chaque étape. L'invention concerne également le véhicule automobile comportant la batterie 10 électrique et l'accessoire 50 électrique connecté à ladite batterie, dans lequel l'alimentation dudit accessoire 50 est commandée par le procédé décrit précédemment. Ce procédé est de préférence mis en oeuvre lorsque la batterie 10 est chargée, c'est-à-dire après que la fin d'une charge de la batterie ait été détectée, et pendant que la batterie 10 est encore connectée au générateur 20 externe.

Le procédé selon l'invention présente les avantages suivants :

- il s'applique quelles que soient les conditions de déclenchement ou d'interruption de la charge de la batterie, c'est-à-dire quels que soient l'état de charge, la charge nominale, le programmateur de charge, le retardateur de charge par exemple,
- il s'applique quelles que soient les conditions de déclenchement ou d'interruption de la mise en oeuvre du procédé, c'est-à-dire par exemple que le procédé soit mis en oeuvre immédiatement après la fin de la charge ou plusieurs heures plus tard,
- le procédé peut être mis en oeuvre par un superviseur classique, avec la même régulation de courant que celle utilisée habituellement pendant la charge de la batterie,
- les paramètres de réglages sont peu nombreux et faciles à ajuster,
- il s'applique à tout type de batterie, de chargeur et de capteur de courant.

En particulier, ce procédé peut être mis en oeuvre même si le capteur de courant 44 mesurant le courant d'entrée de la batterie 10 est peu précis, par exemple précis à plus ou moins 3 Ampères près.

## Revendications

1. Procédé pour alimenter un accessoire (50) électrique d'un véhicule automobile comportant une batterie (10) électrique à laquelle ledit accessoire (50) est raccordé, ledit accessoire (50) et ladite batterie (10) étant également connectés électriquement à un générateur (20) électrique externe, selon lequel on réalise alternativement les étapes suivantes :

   a) on alimente ledit accessoire (50) par la batterie (10) du véhicule et
   b) on alimente ledit accessoire (50) et ladite batterie (10) par le générateur (20) électrique externe,

en répétant les étapes a) et b), de manière à ce que la batterie ne se décharge pas au-delà d'une valeur seuil de charge inférieure.

2. Procédé selon la revendication précédente, comportant les étapes suivantes :

- on détermine une valeur seuil inférieure (Seuil1, Smin) d'une première caractéristique de charge (Pct_UserSoc, V_CellVoltMin) de la batterie (10),
- on réalise l'étape a) lorsque ladite première caractéristique de charge (Pct_UserSoc, V_CellVoltMin) est supérieure à ladite valeur seuil inférieure (Seuil1, Smin) et
- on réalise l'étape b) lorsque la première caractéristique de charge (Pct_UserSoc, V_CellVoltMin) de la batterie (10) est inférieure à ladite valeur seuil inférieure (Seuil1, Smin).

3. Procédé selon la revendication 2, selon lequel on détermine, au moment où le procédé commence à être mis en oeuvre, une valeur initiale (SOC_Init, V_CellVoltMin_Init), de ladite première caractéristique de charge (Pct_UserSoc, V_CellVoltMin), et ladite valeur seuil inférieure (Seuil1, Smin) est déterminée en fonction de cette valeur initiale (SOC_Init, V_CellVoltMin_Init) de ladite première caractéristique de charge (Pct_UserSoc, V_CellVoltMin).

4. Procédé selon la revendication 2, selon lequel ladite valeur seuil inférieure (Seuil1, Smin) est une valeur fixe prédéterminée.

5. Procédé selon l'une des revendications 2 à 4, selon lequel :

- on détermine une valeur seuil supérieure (Seuil2, Smax) d'au moins une deuxième caractéristique (Pct_UserSoc, V_CellVoltMax) de charge de la batterie (10),
- on réalise l'étape b) tant que ladite deuxième caractéristique de charge (Pct_UserSoc, V_CellVoltMax) de la batterie (10) est inférieure à ladite valeur seuil supérieure (Seuil2, Smax).

6. Procédé selon la revendication 5, selon lequel :

- lorsque ladite deuxième caractéristique de charge (Pct_UserSoc, V_CellVoltMax) de la batterie (10) devient supérieure à ladite valeur seuil supérieure (Seuil2, Smax), on réalise l'étape a).

7. Procédé selon l'une des revendications 5 et 6, selon lequel on détermine, au moment où le procédé commence à être mis en oeuvre, une valeur initiale (SOC_Init, V_CellVoltMax_Init), de ladite deuxième caractéristique de charge (Pct_UserSoc, V_CellVoltMax), et ladite valeur seuil supérieure (Seuil2, Smax) est déterminée en fonction de cette deuxième valeur initiale (SOC_Init, V_CellVoltMax_Init) de ladite deuxième caractéristique de charge (Pct_UserSoc, V_CellVoltMax).

8. Procédé selon l'une des revendications 5 et 6, selon lequel ladite valeur seuil supérieure (Seuil2, Smax) est une valeur fixe prédéterminée.

9. Procédé selon l'une des revendications 5 à 8, selon lequel on alterne la réalisation des étapes a) et b) en passant de l'étape a) à l'étape b) lorsque ladite première caractéristique de charge (Pct_UserSoc, V_CellVoltMin) atteint ladite valeur seuil inférieure (Seuil1, Smin) et en passant de l'étape b) à l'étape a) lorsque la deuxième caractéristique de charge (Pct_UserSoc, V_CellVoltMax) atteint ladite valeur seuil supérieure (Seuil2, Smax).

10. Procédé selon l'une des revendications 5 à 9, selon lequel lesdites première et deuxième caractéristiques de charge sont identiques.

11. Procédé selon la revendication 9, selon lequel lesdites première et deuxième caractéristiques de charge correspondent à l'état de charge (Pct_UserSoc) de la batterie (10).

12. Procédé selon l'une des revendications 5 à 9, selon lequel lesdites première et deuxième caractéristiques de charge correspondent à deux grandeurs physiques différentes.

13. Procédé selon la revendication 12, selon lequel, ladite batterie (10) du véhicule comportant une pluralité d'accumulateurs appelés cellules, ladite première caractéristique de charge correspond à la tension (V_CellVoltMin) aux bornes de la cellule la moins chargée de la batterie (10) et ladite deuxième caractéristique de charge correspond à la tension (V_CellVoltMax) aux bornes de la cellule la plus chargée de la batterie (10).

14. Procédé selon l'une des revendications 2 à 13, selon lequel

   - on réalise l'étape a) pendant au moins une durée minimale prédéterminée.

15. Procédé selon l'une des revendications précédentes, selon lequel la première étape mise en oeuvre est l'étape b).

16. Procédé selon l'une des revendications précédentes, selon lequel la première étape mise en oeuvre est l'étape a).

17. Procédé selon l'une des revendications précédentes, selon lequel un superviseur (40) transmettant une consigne de courant (ECV) d'entrée dans la batterie (10) à un chargeur (30) connecté à cette batterie (10), cette consigne de courant (ECV) est nulle lors de l'étape a).

18. Procédé selon la revendication 17, selon lequel ladite consigne de courant (ECV) est déterminée en fonction de la puissance électrique maximale pouvant être fournie par le chargeur et/ou en fonction de la puissance maximale pouvant être reçue par la batterie (10).

19. Véhicule automobile comportant un accessoire (50) électrique connecté à une batterie (10) électrique dudit véhicule, dans lequel l'alimentation dudit accessoire (50) est commandée par le procédé selon l'une des revendications précédentes lorsque la batterie (10) est chargée et connectée à un générateur (20) externe.

**Patentansprüche**

1. Verfahren zur Versorgung eines elektrischen Zubehörteils (50) eines Kraftfahrzeugs, das eine elektrische Batterie (10) aufweist, an die das Zubehörteil (50) angeschlossen ist, wobei das Zubehörteil (50) und die Batterie (10) ebenfalls mit einem externen elektrischen Generator (20) verbunden sind, gemäß dem abwechselnd die folgenden Schritte durchgeführt werden:

   a) das Zubehörteil (50) wird von der Batterie (10) des Fahrzeugs versorgt und
   b) das Zubehörteil (50) und die Batterie (10) werden vom externen elektrischen Generator (20) versorgt,

   indem die Schritte a) und b) wiederholt werden, damit die Batterie sich nicht über einen unteren Ladeschwellwert hinaus entlädt.

2. Verfahren nach dem vorhergehenden Anspruch, das die folgenden Schritte aufweist:

   - es wird ein unterer Schwellwert (Seuil1, Smin) einer ersten Ladekennlinie (Pct_UserSoc, V_CellVoltMin) der Batterie (10) bestimmt,
   - der Schritt a) wird durchgeführt, wenn die erste Ladekennlinie (Pct_UserSoc, V_CellVoltMin) höher als der untere Schwellwert (Seuil1,Smin) ist, und
   - der Schritt b) wird durchgeführt, wenn die erste Ladekennlinie (Pct_UserSoc, V_CellVoltMin) der Batterie (10) unter dem unteren Schwellwert (Seuil1, Smin) liegt.

3. Verfahren nach Anspruch 2, gemäß dem in dem Moment, in dem die Anwendung des Verfahrens beginnt, ein Ausgangswert (SOC_Init, V_CellVoltMin_Init) der ersten Ladekennlinie (Pct_UserSoc, V_CellVoltMin) bestimmt wird, und der untere Schwellwert (Seuil1, Smin) abhängig von diesem Ausgangswert (SOC_Init, V_CellVoltMin_Init) der ersten Ladekennlinie (Pct_UserSoc, V_CellVoltMin) bestimmt wird.

4. Verfahren nach Anspruch 2, gemäß dem der untere Schwellwert (Seuil1, Smin) ein vorbestimmter Festwert ist.

5. Verfahren nach einem der Ansprüche 2 bis 4, gemäß dem:

   - ein oberer Schwellwert (Seuil2, Smax) mindestens einer zweiten Ladekennlinie (Pct_UserSoc, V_CellVoltMax) der Batterie (10) bestimmt wird,
   - der Schritt b) durchgeführt wird, so lange die zweite Ladekennlinie (Pct_UserSoc, V_CellVoltMax) der Batterie (10) niedriger als der obere Schwellwert (Seuil2, Smax) ist.

6.  Verfahren nach Anspruch 5, gemäß dem:

    - wenn die zweite Ladekennlinie (Pct_UserSoc, V_CellVoltMax) der Batterie (10) höher als der obere Schwellwert (Seuil2, Smax) wird, der Schritt a) durchgeführt wird.

7.  Verfahren nach einem der Ansprüche 5 und 6, gemäß dem in dem Moment, in dem die Anwendung des Verfahrens beginnt, ein Ausgangswert (SOC_Init, V_CellVoltMax_Init) der zweiten Ladekennlinie (Pct_UserSoc, V_CellVoltMax) bestimmt wird, und der obere Schwellwert (Seuil2, Smax) abhängig von diesem zweiten Ausgangswert (SOC_Init, V_CellVoltMax_Init) der zweiten Ladekennlinie (Pct_UserSoc, V_CellVoltMax) bestimmt wird.

8.  Verfahren nach einem der Ansprüche 5 und 6, gemäß dem der obere Schwellwert (Seuil2, Smax) ein vorbestimmter Festwert ist.

9.  Verfahren nach einem der Ansprüche 5 bis 8, gemäß dem die Durchführung der Schritte a) und b) abgewechselt wird, indem vom Schritt a) zum Schritt b) übergegangen wird, wenn die erste Ladekennlinie (Pct_UserSoc, V_CellVoltMin) den unteren Schwellwert (Seuil1, Smin) erreicht, und indem vom Schritt b) zum Schritt a) übergegangen wird, wenn die zweite Ladekennlinie (Pct_UserSoc, V_CellVoltMax) den oberen Schwellwert (Seuil2, Smax) erreicht.

10. Verfahren nach einem der Ansprüche 5 bis 9, gemäß dem die ersten und zweiten Ladekennlinien gleich sind.

11. Verfahren nach Anspruch 9, gemäß dem die ersten und zweiten Ladekennlinien dem Ladezustand (Pct_UserSoc) der Batterie (10) entsprechen.

12. Verfahren nach einem der Ansprüche 5 bis 9, gemäß dem die ersten und zweiten Ladekennlinien zwei verschiedenen physikalischen Größen entsprechen.

13. Verfahren nach Anspruch 12, gemäß dem, da die Batterie (10) des Fahrzeugs eine Vielzahl von Zellen genannten Akkumulatoren aufweist, die erste Ladekennlinie der Spannung (V_CellVoltMin) an den Klemmen der am wenigsten geladenen Zelle der Batterie (10) entspricht, und die zweite Ladekennlinie der Spannung (V-CellVoltMax) an den Klemmen der am meisten geladenen Zelle der Batterie (10) entspricht.

14. Verfahren nach einem der Ansprüche 2 bis 13, gemäß dem

    - der Schritt a) während mindestens einer vorbestimmten Mindestdauer durchgeführt wird.

15. Verfahren nach einem der vorhergehenden Ansprüche, gemäß dem der erste angewendete Schritt der Schritt b) ist.

16. Verfahren nach einem der vorhergehenden Ansprüche, gemäß dem der erste angewendete Schritt der Schritt a) ist.

17. Verfahren nach einem der vorhergehenden Ansprüche, gemäß dem, da ein Überwacher (40) einen Eingangs-Stromsollwert (ECV) in die Batterie (10) an ein mit dieser Batterie (10) verbundenes Ladegerät (30) überträgt, dieser Stromsollwert (ECV) im Schritt a) Null ist.

18. Verfahren nach Anspruch 17, gemäß dem der Stromsollwert (ECV) abhängig von der maximalen elektrischen Leistung, die vom Ladegerät geliefert werden kann, und/oder abhängig von der maximalen Leistung bestimmt wird, die von der Batterie (10) empfangen werden kann.

19. Kraftfahrzeug, das ein elektrisches Zubehörteil (50) aufweist, das mit einer elektrischen Batterie (10) des Fahrzeugs verbunden ist, wobei die Versorgung des Zubehörteils (50) von dem Verfahren nach einem der vorhergehenden Ansprüche gesteuert wird, wenn die Batterie (10) geladen und mit einem externen Generator (20) verbunden ist.

## Claims

1.  Method for powering an electrical accessory (50) of a motor vehicle comprising an electric battery (10) to which said accessory (50) is connected, said accessory (50) and said battery (10) also being electrically connected to an external electrical generator (20), whereby the following steps are performed in alternation:

> a) said accessory (50) is powered by the battery (10) of the vehicle, and
> b) said accessory (50) and said battery (10) are powered by the external electrical generator (20),

by repeating steps a) and b), in such a way that the battery is not discharged beyond a lower charging threshold value.

2. Method according to the preceding claim, comprising the following steps:

> - a lower threshold value (Seuil, Smin) of a first charge characteristic (Pct_UserSoc, V_CellVoltMin) of the battery (10) is determined,
> - step a) is performed when said first charge characteristic (Pct_UserSoc, V_CellVoltMin) is greater than said lower threshold value (Seui1, Smin), and
> - step b) is performed when the first charge characteristic (Pct_UserSoc, V_CellVoltMin) of the battery (10) is below said lower threshold value (Seui1, Smin).

3. Method according to Claim 2, wherein, at the moment when the execution of the method starts, an initial value (SOC_Init, V_CellVoltMin_Init) of said first charge characteristic (Pct_UserSoc, V_CellVoltMin) is determined, and said lower threshold value (Seui1, Smin) is determined as a function of this initial value (SOC_Init, V_CellVoltMin_Init) of said first charge characteristic (Pct_UserSoc, V_CellVoltMin).

4. Method according to Claim 2, wherein said lower threshold value (Seui1, Smin) is a predetermined fixed value.

5. Method according to any of Claims 2 to 4, wherein:

> - an upper threshold value (Seuil2, Smax) of at least a second charge characteristic (Pct_UserSoc, V_CellVoltMax) of the battery (10) is determined,
> - step b) is performed while said second charge characteristic (Pct_UserSoc, V_CellVoltMax) of the battery (10) remains below said upper threshold value (Seuil2, Smax).

6. Method according to Claim 5, wherein:

> - when said second charge characteristic (Pct_UserSoc, V_CellVoltMax) of the battery (10) becomes greater than said upper threshold value (Seuil2, Smax), step a) is performed.

7. Method according to either of Claims 5 and 6, wherein, at the moment when the execution of the method starts, an initial value (SOC_Init, V_CellVoltMax_Init) of said second charge characteristic (Pct_UserSoc, V_CellVoltMax) is determined, and said upper threshold value (Seuil2, Smax) is determined as a function of this second initial value (SOC_Init, V_CellVoltMax_Init) of said second charge characteristic (Pct_UserSoc, V_CellVoltMax).

8. Method according to either of Claims 5 and 6, wherein said upper threshold value (Seuil2, Smax) is a predetermined fixed value.

9. Method according to any of Claims 5 to 8, wherein the performance of steps a) and b) is alternated by switching from step a) to step b) when said first charge characteristic (Pct_UserSoc, V_CellVoltMin) reaches said lower threshold value (Seuil, Smin), and by switching from step b) to step a) when the second charge characteristic (Pct_UserSoc, V_CellVoltMax) reaches said upper threshold value (Seuil2, Smax).

10. Method according to any of Claims 5 to 9, wherein said first and second charge characteristics are identical.

11. Method according to Claim 9, wherein said first and second charge characteristics correspond to the state of charge (Pct_UserSoc) of the battery (10).

12. Method according to any of Claims 5 to 9, wherein said first and second charge characteristics correspond to two different physical quantities.

13. Method according to Claim 12, wherein said battery of the vehicle (10) comprising a plurality of accumulators called cells, said first charge characteristic corresponds to the voltage (V_CellVoltMin) at the terminals of the least charged cell of the battery (10), and said second charge characteristic corresponds to the voltage (V_CellVoltMax) at the terminals of the most charged cell of the battery (10).

14. Method according to any of Claims 2 to 13, wherein

   - step a) is performed for at least a predetermined minimum duration.

15. Method according to any of the preceding claims, wherein the first step executed is step b).

16. Method according to any of the preceding claims, wherein the first step executed is step a).

17. Method according to any of the preceding claims, wherein a controller (40) transmitting an input current set point (EVC) for the battery (10) to a charger (30) connected to this battery (10), this current set point (EVC) is zero in step a).

18. Method according to Claim 17, wherein said current set point (EVC) is determined as a function of the maximum electrical power that can be supplied by the charger and/or as a function of the maximum power that can be received by the battery (10).

19. Motor vehicle comprising an electrical accessory (50) connected to an electric battery (10) of said vehicle, wherein the supply of power to said accessory (50) is controlled by the method according to any of the preceding claims when the battery (10) is charged and connected to an external generator (20).

Fig.1

Fig.2

Fig.3

Fig.4

Pct_UserSoc

Seuil2

Seuil1

Soc_Init

**Fig.5**

b) a) b) a)

t

Cmax

V_CellVoltMax (t)

V_CellVoltMax_Init

V_CellVoltMin_Init

Smin

Cmin

**Fig.6**

V_CellVoltMin (t)

a) b) a)

t

**Fig.7**

41

P_ChargeAvalaible_bcb_est

50

I_Setpoint

30

44

10

+

EVC

60

43 42

40

20

I_bhv_mes

Volt_HVNet_cons

P_ChargeMax_bhv_est

**RÉFÉRENCES CITÉES DANS LA DESCRIPTION**

**Documents brevets cités dans la description**

- US 2008218129 A1
- US 2011095729 A